Europäisches Patentamt

European Patent Office

Office européen des brevets

(11) Publication number : **0 507 290 A2**

(19)

## (12) EUROPEAN PATENT APPLICATION

(21) Application number : **92105651.1**

(22) Date of filing : **02.04.92**

(51) Int. Cl.⁵ : **G06K 7/08,** G07D 7/00

(30) Priority : **05.04.91 IT MI910939**

(43) Date of publication of application :
**07.10.92 Bulletin 92/41**

(84) Designated Contracting States :
**AT BE CH DE DK ES FR GB GR IT LI LU NL PT
SE**

(71) Applicant : **MANTEGAZZA ANTONIO ARTI
GRAFICHE S.r.l.
Via Milano 71
I-20021 Ospiate di Bollate (Milan) (IT)**

(72) Inventor : **Mantegazza, Antonio
Via Sporting Mirasole 25
I-20090 Noverasco di Opera, Milan (IT)**

(74) Representative : **Modiano, Guido et al
c/o Modiano & Associati S.r.l. Via Meravigli, 16
I-20123 Milano (IT)**

(54) **Device for detecting coding regions particularly for reading forms in general.**

(57)    Device for detecting coding regions particularly for reading forms in general, which comprises photocells for detecting a sheet-like element provided with a plurality of predefined coding regions, a motor and roller for moving the sheet-like element which can be selectively activated and deactivated by the photocells, a magnet for activating the predefined coding regions, at least one pair of read heads for detecting the predefined coding regions and for generating a read signal, a converter for each reading head, for converting the read signal into an analysis signal, and finally an analog/digital converter for transferring the analysis signal which arrives from each converter to a microcomputer which generates a synchronization signal which can be transmitted to the converter.

Fig. 1

EP 0 507 290 A2

The present invention relates to a device for detecting coding regions particularly for reading forms in general.

Currently, in the banking field there is a proliferation of forged and/or counterfeited documents, such as cashier's checks, checks drawn on current accounts and the like.

The check number and the details of the bank routing code of the bank and of the branch office, and possibly the number of the current account, are in fact currently indicated with the CMC7 code on checks drawn on current accounts or on cashier's checks; there is no coding related to other parts of the check.

Readers with a single magnetic head are used in banks, or rather at the counters and in the clearinghouses; said readers detect the CMC7 code of the check, in order to facilitate operations at the counter on one hand and to improve the automation of check routing in clearing-houses on the other hand. Unfortunately, said readers are currently unable to detect the counterfeiting or forgery of a check.

However, types of readers are also known in other fields of operation, such as mail sorting, which detect different codes, such as for example post codes printed with fluorescent ink in a preset position on standard-size mail documents. However, these devices are currently substantially unsuitable for recognizing counterfeited and/or forged checks.

The aim of the present invention is to eliminate or substantially reduce the problems described above in known types of readers by providing a device for detecting coding regions particularly for reading forms in general, which detects preset regions which contain information which is coded as described in pending Italian patent application No. 20727/A filed June 22, 1990 by the same Applicant.

Within the scope of the above aim, an object of the present invention is to provide a device which detects changes or alterations of the coded regions on a check.

Not least object of the present invention is to provide a device which is relatively easy to manufacture and at competitive costs.

This aim, the objects mentioned and others which will become apparent hereinafter are achieved by a device for detecting coding regions particularly for reading forms in general according to the invention, characterized in that it comprises means for detecting a sheet-like element provided with a plurality of predefined coding regions, means for moving said sheet-like element which can be selectively activated and deactivated by said detection means, means for activating said predefined coding regions, at least one pair of read heads which are suitable for detecting said predefined coding regions and for generating a read signal, conversion means for each of said read heads which are suitable for converting said read signal into an analysis signal, and means for transferring said analysis signal arriving from each of said conversion means to processing means which are selectively internal to said device or of the remote type.

Further characteristics and advantages of the invention will become apparent from the description of some preferred but not exclusive embodiments of a device for detecting coding regions particularly for reading forms in general according to the invention, illustrated only by way of non-limitative example in the accompanying drawings, wherein:

figure 1 is a schematic view of an embodiment of the device according to the invention;

figure 2 is a schematic view of another embodiment of the device according to the invention;

figure 3 is a diagram of read, synchronization and analysis signals;

figure 4 is a front view of a sheet-like element with predefined coding regions; and

figure 5 is a flowchart of an operating procedure of the device according to the invention.

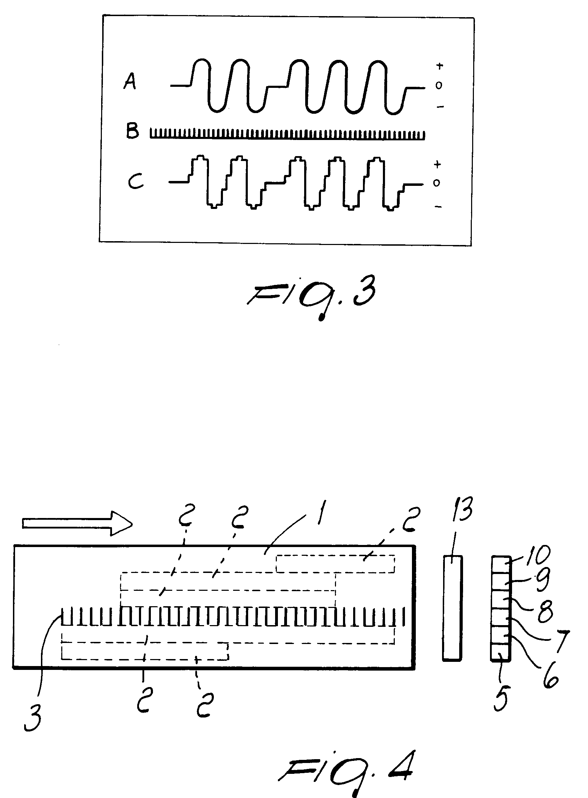

With reference to the above figures, a device according to the invention comprises means for detecting a sheet-like element 1, such as for example the check described in patent application no. 20727/A filed June 22, 1990 by the same Applicant, which has a plurality of predefined coding regions 2, as more clearly shown in figure 4, which bear elements which can be magnetically activated. The sheet-like element or check 1 furthermore has a band 3 in which a plurality of vertical bars appear; said bars are spaced from one another with a constant pitch in order to provide the device according to the invention with a constant reference for generating a synchronization signal, as more clearly described hereinafter.

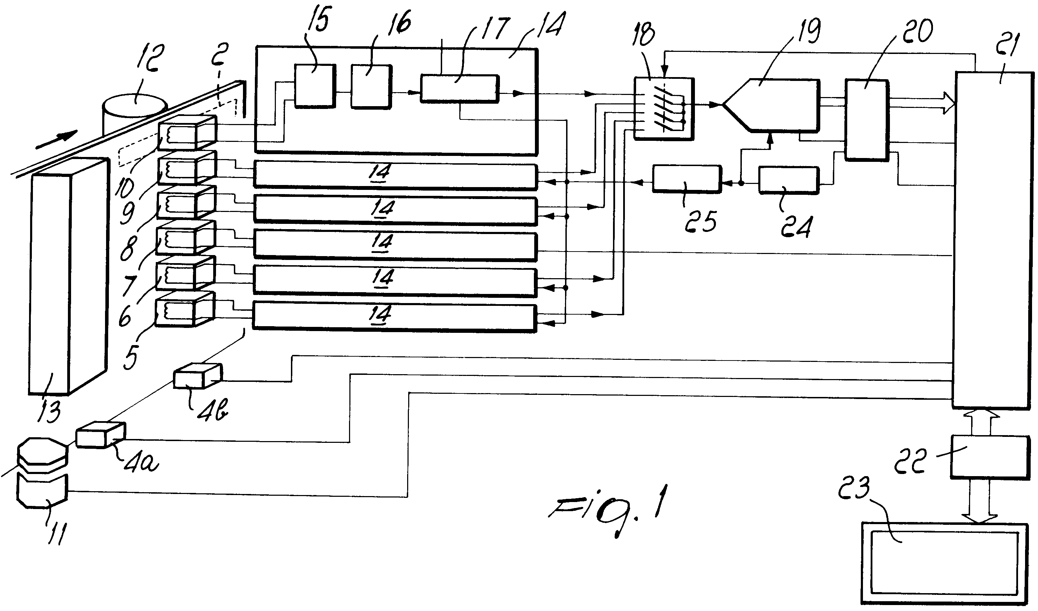

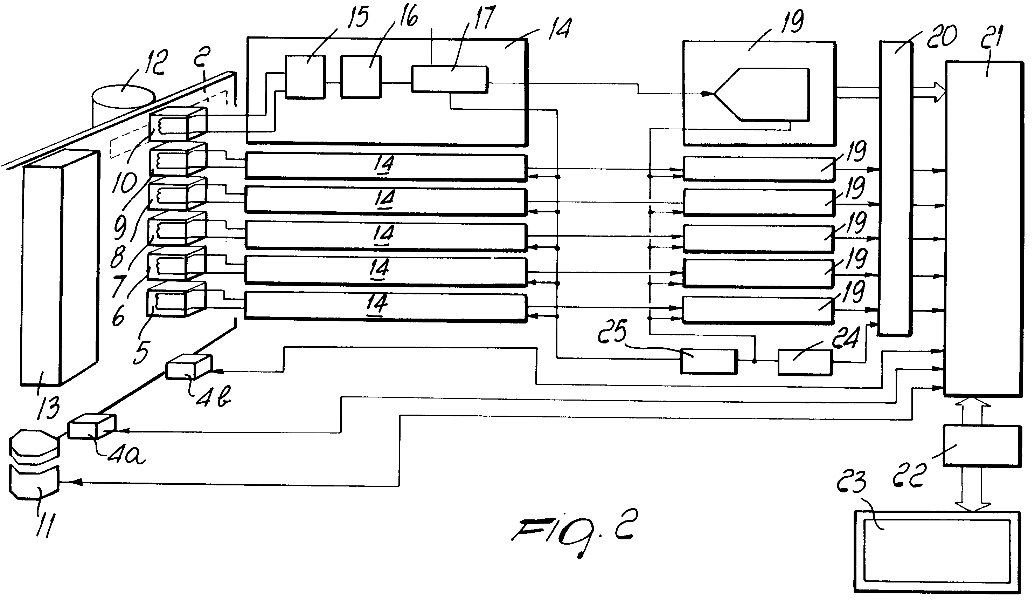

The detection means comprise at least one pair of photocells 4a and 4b for detecting the presence of the check or sheet-like element 1. As more clearly illustrated in figures 1 and 2, the photocell 4a is arranged upstream of read heads 5, 6, 7, 8, 9 and 10; the other photocell 4b is arranged downstream of the read heads 5, 6, 7, 8, 9 and 10. The photocells 4a and 4b are furthermore connected to processing means in order to activate the means for moving the sheet-like element 1.

The means for moving the sheet-like element 1, which can be selectively activated and deactivated by the photocells 4a and 4b by virtue of the processing means, comprise at least one motor 11, preferably of the step type, for moving the sheet-like element 1 inside the device along the direction indicated by the arrows in figures 1, 2 and 4, and rollers 12 for pressing said sheet-like element against the read heads 5, 6, 7, 8, 9 and 10.

The device furthermore comprises means for activating the predefined coding regions 2 and 3. Said activation means comprise a magnet 13, preferably of the permanent type, which is arranged upstream of the read heads 5, 6, 7, 8, 9 and 10.

The device furthermore comprises the read heads, which are five in the example shown in figures 1 and 2 and are designated by the reference numerals 5, 6, 7, 8, 9 and 10, for detecting the predefined coding regions 2 and 3, once they have been activated, and for generating a read signal, designated by the letter A in figure 3. The set of read heads 5, 6, 7, 8, 9 and 10 can be formed by heads of the magnetic type or, in an alternative embodiment, can be of a mixed type, i.e. the set of heads can contain at least one optical read head.

The invention furthermore comprises conversion means 14 for each read head 5, 6, 7, 8, 9 and 10 for converting the read signal into an analysis signal, designated by the letter C in figure 3.

The conversion means, for each read head, comprise a read signal preamplifier 15, a read signal band pass filter 16 and a sampler 17 for converting the read signal into the analysis signal. The sampler 17 is preferably of the type known as "sample and hold" in electronics, and can be controlled by the synchronization signal, illustrated in figure 3 by the diagram designated by the letter B.

For the heads which read the CMC7 code and the region 3, which are the heads 5 and 7 in the example illustrated in figures 1 and 2, the conversion means are provided with the preamplifier 15 and with a band pass filter 16 but have no sampler.

Finally, the invention comprises means for transferring the analysis signal, which arrives from each conversion means 14, to processing means. Said processing means also generate a synchronization signal which can be transmitted to the conversion means, as will become apparent hereinafter.

The transfer means comprise, in a first preferred but not exclusive embodiment, a multiplexer 18, an analog/digital converter 19 for the analysis signal, and a first port 20 for transferring the signals arriving from the analog/digital converter 19 to the processing means. Each of the conversion means 14 is connected to the multiplexer 18. The analog/digital converter 19 is controlled by the synchronization signal.

In another preferred but not exclusive embodiment, the transfer means comprise, for each conversion means 14, an analog/digital converter 19 for the analysis signal and the first port 20 for transferring the digitized analysis signal to the processing means. The synchronization signal controls the analog/digital converter 19.

In all the previously described embodiments of the device according to the invention, the processing means are constituted by a microcomputer 21 which comprises means for storing a procedure for recognizing the sheet-like element. The storage means selectively comprise read-only memories and random-access memories which are selectively inserted in the microcomputer 21 and in the device according to the invention.

The microcomputer 21 comprises a second communications port 22 which can be selectively connected to display means and to remote processing means for the digitized analysis signal, both of which are designated by the reference numeral 23.

The signal output by the conversion means 14 connected to the head is transmitted, by means of the first port 20, to the processing means 21, regardless of whether they are remote or local, i.e. included in the device. A device for generating a synchronization signal, connected to the processing means and to all the conversion means 14, except those connected to the head 7, comprises a clock 24 which can be controlled by the processing means and a synchronization unit 25 which generates the synchronization signal. The synchronization signal is sent to the conversion means, whereas the synchronization signal of the clock is sent to the analog/digital converter 19.

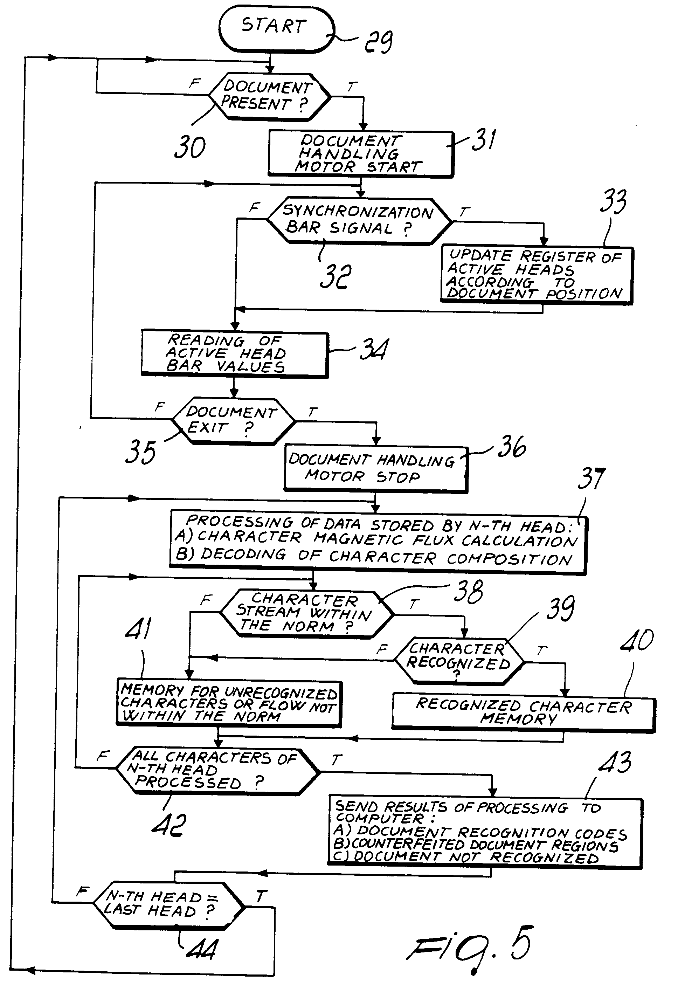

In practice, operation is described with reference to figure 5, which illustrates a flowchart of a procedure which can be stored in the storage means in order to optimize the operation of the device according to the invention.

Initially (step 29) the device is initialized in order to reset all the internal parameters, such as motor position, photocell status and the like. Then (step 30) the photocell 4a is checked to verify if a document, i.e. a check 1, is present in the device or not. In the case of negative verification (step 30 exit F), control remains at step 30; otherwise (step 30 exit T) control passes to step 31.

In step 31, the motor 11 is activated and pulls the check 1 into the device. During traction, the regions 2 and 3 pass adjacent to the magnet 13, and thus the magnetizable elements which are present in said regions are partially magetized in order to be detected by the magnetic heads (in the particular application, the heads 5, 6, 7, 8, 9 and 10).

In step 32, the status of the read head of the synchronization region 3 is verified. If synchronization recognition occurs (step 32 exit T), control passes to step 33; otherwise (step 32 exit F) control passes to step 34. Step 33 updates the register of active heads according to the position of the check 1 inside the device, and then control passes to step 34.

In step 34, the values arriving from the active heads are read and stored; then (step 35), verification of the exit of the document, i.e. of the check 1, from the device is performed by checking the photocell 4b. If this verification is positive (step 35 exit T), control passes to step 36; otherwise (step 35 exit F) control returns to step 32, and steps 32 to 35 are repeated in sequence until the check 1 exits from the device.

The motor 11 is then stopped when the document has exited (step 36); in step 37, the data related to the n-th head are processed, i.e. the magnetic flux detected by the magnetic read heads is processed and the composition of the characters is thus decoded; then control passes to step 38.

In step 38, the stream of coded characters read by the heads is examined. If said stream is within the expected norm (step 38 exit T), control passes to step 39; otherwise (step 38 exit F), control passes to step 41. Then the read character is examined (step 39). If said character is recognized (step 39 exit T), control passes to step 40; otherwise (step 39 exit F) control passes to step 41.

In step 40, the character is stored in the recognized character memory, whereas in step 41 the unknown character is stored in the non-recognized or non-standard character memory.

Then (step 42) the procedure checks whether all the characters read in coded form by the n-th head have been examined. If this verification is positive (step 42 exit T), control passes to step 43; otherwise (step 42 exit F), control returns to step 38, and steps 38 to 42 are repeated until the data or characters read by the n-th head are completed.

In step 43, the results related to the reading of the n-th head, the results of the reading, which can be recognition codes for the check 1, the indication of the forged regions of the document or the failed recognition of the document are sent to the remote or local computer or to display means; then control passes to step 44.

Step 44 verifies that the procedure has ended, i.e. that all the active heads have been examined. If this verification is positive (step 44 exit T), control returns to step 30; otherwise (step 44 exit F), the index of the head is updated and control returns to step 37, repeating steps 37 to 44 for the (n+1)-th head.

In the described data acquisition process, it must be stressed that the synchronization signal, designated by B in figure 3, activates the samplers 17 and the analog/digital converter or converters 19. The read signal arriving from the n-th head is in fact first of all amplified, in order to obtain the read signal designated by A in figure 3, and then sampled by the sample-and-hold sampler 17 in order to be converted into the signal designated by C in figure 3. The latter signal is then digitized by the analog/digital converter or converters 19 in order to transmit it to the microcomputer 21, which may be either local or remote.

Once the data read by the heads have been processed, the following results may be obtained: recognition of the entire document, failed recognition of the document because it is not produced according to what is described in the above mentioned patent application, partial or total forgery or counterfeiting of the document.

It has been observed that the invention achieves the intended aim and objects, constituting a system for recognizing documents (checks in the particular case) which is able to indicate the status of said document immediately after the reading performed by the heads.

The invention thus conceived is susceptible to numerous modifications and variations, all of which are within the scope of the inventive concept. In particular, for high-speed readers provided in so-called clearing-houses of banks, the present invention can be adapted to the document conveyors already in use inside said clearing-houses. All the details may furthermore be replaced with other technically equivalent elements.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Device for detecting coding regions particularly for reading forms in general, characterized in that it comprises means for detecting a sheet-like element provided with a plurality of predefined coding regions, means for moving said sheet-like element which can be selectively activated and deactivated by said detection means, means for activating said predefined coding regions, at least one pair of read heads which are suitable for detecting said predefined coding regions and for generating a read signal, conversion means for each of said read heads which are suitable for converting said read signal into an analysis signal, and means for transferring said analysis signal which arrives from each of said conversion means to processing means which are selectively internal to said device or of the remote type.

2. Device according to claim 1, characterized in that said processing means are suitable for generating a synchronization signal which can be transmitted to said conversion means.

3. Device according to the preceding claims, characterized in that it comprises a plurality of read heads.

4. Device according to the preceding claims, characterized in that said plurality of read heads comprises magnetic read heads.

5. Device according to one or more of the preceding claims, characterized in that said plurality of read heads comprises at least one optical head.

6. Device according to one or more of the preceding claims, characterized in that said conversion means, for each of said read heads, comprise a preamplifier for said read signal, a band pass filter for said read signal and a sampler suitable for converting said read signal into said analysis signal.

7. Device according to claim 5, characterized in that said sampler is of the sample-and-hold type.

8. Device according to claim 5, characterized in that said sampler can be controlled by said synchronization signal.

9. Device according to one or more of the preceding claims, characterized in that said transfer means comprise a multiplexer, an analog/digital converter for said analysis signal and a first port which is suitable for transferring the signals arriving from said analog/digital converter to said processing means, said conversion means being connected to said multiplexer, said analog/digital converter being suitable for being controlled by said synchronization signal.

10. Device according to claims 1 to 7, characterized in that said transfer means comprise, for each conversion means, an analog/digital converter for said analysis signal and a first gate for the transfer of a digitized analysis signal to said processing means, said synchronization signal being suitable for controlling said analog/digital converter.

11. Device according to one or more of the preceding claims, characterized in that it comprises processing means constituted by a microcomputer which comprises means for storing a procedure for recognizing said sheet-like element.

12. Device according to claim 10, characterized in that said storage means selectively comprise read-only memories and random-access memory.

13. Device according to one or more of the preceding claims, characterized in that said microcomputer comprises a second communications port which can be selectively connected to display means and to means for the remote processing of said digitized analysis signal.

14. Device according to one or more of the preceding claims, characterized in that said detection means comprise at least one pair of photocells for detecting said sheet-like element, one of said photocells being arranged upstream of said heads, the other photocell being arranged downstream of said heads.

15. Device according to one or more of the preceding claims, characterized in that said movement means comprise at least one motor for drawing said sheet-like element into said device and rollers for pressing said sheet-like element against said read heads.

16. Device according to one or more of the preceding claims, characterized in that said activation means comprise a magnet which is arranged upstream of said read heads.

17. Device according to one or more of th preceding claims, characterized in that said read heads comprise a head for detecting a synchronization band which is arranged in a predefined region of said sheet-like element.

18. Device according to the preceding claim, characterized in that said synchronization band detection head is connected to said conversion means, said conversion means being connected to said processing means.

19. Device according to one or more of the preceding claims, characterized in that it comprises a synchronization signal generator which is connected to said processing means.

20. Device according to the preceding claims, characterized in that said synchronization signal generator comprises a clock which can be controlled by said processing means and a synchronization unit which is suitable for generating said synchronization signal.

Fig.1

EP 0 507 290 A2

FIG. 2

Fig. 3

Fig. 4

START — 29

DOCUMENT PRESENT ? — 30

DOCUMENT HANDLING MOTOR START — 31

SYNCHRONIZATION BAR SIGNAL ? — 32

UPDATE REGISTER OF ACTIVE HEADS ACCORDING TO DOCUMENT POSITION — 33

READING OF ACTIVE HEAD BAR VALUES — 34

DOCUMENT EXIT ? — 35

DOCUMENT HANDLING MOTOR STOP — 36

PROCESSING OF DATA STORED BY N-TH HEAD:
A) CHARACTER MAGNETIC FLUX CALCULATION
B) DECODING OF CHARACTER COMPOSITION — 37

CHARACTER STREAM WITHIN THE NORM ? — 38

CHARACTER RECOGNIZED ? — 39

MEMORY FOR UNRECOGNIZED CHARACTERS OR FLOW NOT WITHIN THE NORM — 41

RECOGNIZED CHARACTER MEMORY — 40

ALL CHARACTERS OF N-TH HEAD PROCESSED ? — 42

SEND RESULTS OF PROCESSING TO COMPUTER:
A) DOCUMENT RECOGNITION CODES
B) COUNTERFEITED DOCUMENT REGIONS
C) DOCUMENT NOT RECOGNIZED — 43

N-TH HEAD = LAST HEAD ? — 44

Fig. 5

9